# FASCICULE DE BREVET EUROPEEN

(11) **EP 1 282 362 B1**
(45) Date de publication et mention de la délivrance du brevet: **19.04.2006**
(21) Numéro de dépôt: 01936579.0
(22) Date de dépôt: 18.05.2001
(51) Int. Cl.: A23K 1/00, A23K 1/18, A61K 9/00

(54) **ALIMENT RALENTISSANT LA VITESSE D'INGESTION DES CHIENS**
FUTTER WELCHES DIE NAHRUNGSAUFNAHME PRO ZEITEINHEIT BEI HUNDEN VERZÖGERT
FOOD FOR SLOWING DOWN FEED INTAKE SPEED IN DOGS

(30) Priorité: 19.05.2000 FR 0006425
(43) Date de publication de la demande: 12.02.2003
(73) Titulaire: Royal Canin S.A., 30470 Aimargues (FR)
(72) Inventeur: LE CHEVILLER, Jean-Patrick, F-56500 La Chapelle-Neuve (FR); RICOUR, Patrice, F-34000 Montpellier (FR); SERGHERAERT, Renaud, F-34690 Fabregues (FR)
(74) Mandataire: Ahner, Francis
(86) Numéro de dépôt international: PCT/FR2001/001531
(87) Numéro de publication internationale: WO 2001/087084

(56) Documents cités:
- EP-A- 0 337 571
- EP-A- 0 668 024
- EP-A- 0 909 536
- WO-A-95/08931
- FR-A- 2 720 944
- FR-A- 2 725 113
- US-A- 2 385 068

## Description

L'invention concerne un aliment sec pour chien caractérisé en ce qu'il se présente sous la forme d'un parallélépipède des dimensions de 29 à 40 mm X 29 à 40 mm X 19 à 30 mm. L'invention se rapporte également à une utilisation d'un tel aliment pour ralentir la vitesse d'ingestion d'aliments par les chiens, ou en tant qu'additif ou médicament vétérinaire, en particulier pour son utilisation dans l'amélioration de l'hygiène bucco-dentaire chez les chiens.

A l'origine, les chiens étaient des carnivores chasseurs descendant du loup *(Encyclopédie du chien,* Ed. Hatier Royal Canin, 1997). Leur bouche et leur dentition sont celles de carnassiers, bien adaptées pour attraper des proies vivantes ou mortes, à les mordre, à les déchirer et à mastiquer leurs viandes.

La domestication des chiens par l'homme a profondément modifié l'espèce canine tant dans ses formats et ses races que dans ses comportements.

Au niveau des formats des chiens, on les classe couramment en trois grandes catégories: les petites races (1 à 10 kg), les races moyennes (11 à 25 kg) et les grandes races (26 à 80 kg et plus). Dans la dernière catégorie, les chiens les plus grands sont parfois qualifiés de races géantes.

La domestication a aussi changé le comportement alimentaire des chiens. N'ayant plus l'obligation de chasser des proies vivantes ou mortes pour se nourrir, et bénéficiant d'aliments prêts à être consommés, qu'ils soient des préparations ménagères ou des aliments industriels (pâtées humides ou aliments secs), les chiens n'ont plus l'habitude de mordre, de déchirer et de mastiquer leur nourriture . Ils avalent rapidement ces aliments pratiquement sans faire travailler leur dentition et sans que leur salive riche en eau et en enzymes ait le temps d'imbiber les aliments. Les chiens ainsi nourris sont d'autant plus gloutons que les aliments offerts sont de plus en plus appétents. Et aussi, les chiens les plus gloutons sont ceux de grande taille, leurs besoins nutritionnels quotidiens étant les plus élevés.

Ainsi, l'on entend souvent les propriétaires et les éleveurs de chiens se plaindre que leurs chiens mangent trop vite, risquant en conséquence des troubles pour leur santé.

En effet, les vétérinaires décrivent plusieurs pathologies des chiens ayant pour cause une ingestion trop rapide des aliments.

L'affection la plus bénigne, mais néanmoins fort désagréable tant pour les chiens que pour leurs propriétaires, dont on peut accuser une ingestion trop rapide d'aliment, est la formation de tartre et de plaque dentaires qui sont à l'origine de toutes les maladies parodontales (A. Grimberg et Ph. Beltramo, *Recueil de Médecine Vétérinaire*, 1991, 167 (10/11), 997-1003). Afin de combattre la formation de tartre et de plaque dentaires des animaux de compagnie, de nombreux procédés, incluant l'utilisation d'additifs chimiques, ont été proposés. Par exemple, la société Colgate-Palmolive Company a proposé plusieurs moyens brevetés: par un aliment extrudé, nutritionnellement équilibré, ayant préférentiellement une forme de cylindre ou de disque (« disc shape ») et contenant des striations fibreuses (EP 0 575 021, US 899534), ou par un « produit à mâcher » (« chew product ») qui n'est pas un aliment équilibré mais une matrice cellulaire flexible comestible contenant un matériau cellulosique et un additif (EP 0 552 897, US 822241).

A l'autre extrémité de la gravité des pathologies qui peuvent être engendrées par une ingestion trop rapide d'aliment est le syndrome dilatation - torsion de l'estomac du chien, particulièrement, mais non exclusivement, chez les chiens de races de grande taille. L'ingestion trop rapide d'un repas en est considérée comme un facteur de risque, sans que la nature ni la qualité des aliments puissent être incriminées dans la littérature vétérinaire (Véronique Viateau, *Recueil de Médecine Vétérinaire*, 1993, 169 (11/12), 985-997; C.F. Burrows et L.A. Ignaszewski, *Journal of Small Animal Practice,* 1990, 31, 495-501). L'ingestion trop rapide d'aliment provoque de l'aérophagie, avec accumulation rapide de gaz qui dilatent l'estomac pouvant conduire à un volvulus gastrique (W.G. Guilford, *Strombeck'.s Small Animal Gastroenterology.* 3^{rd} Edition, W.B. Saunders Compagny Ed., 1996, pp 303-317).

Il y a donc une nécessité de trouver des nouveaux moyens pour faire ingérer plus lentement les aliments par les chiens, et particulièrement les chiens de grandes races.

Les aliments industriels pour chiens se classent en deux grandes catégories: des aliments humides et des aliments secs. Ce sont les aliments secs qui connaissent actuellement les taux de croissance les plus élevés sur le marché des petfoods.

Par rapport aux aliments humides, les aliments secs offrent de nombreux avantages. Ils sont pratiques à utiliser et faciles à conserver. En plus, de par leur taux d'humidité inférieur à 14%, ils sont plus économiques que les aliments humides: il faut seulement en moyenne 1 kg d'aliment sec pour obtenir l'équivalent des apports nutritionnels de 4 kg d'aliment humide.

Les aliments secs pour chiens se présentent sous deux grandes catégories: des aliments monocomposants et des aliments multicomposants.

Les aliments monocomposants sont des aliments dont les composants unitaires sont identiques. Ceux-ci, en fonction de leur technologie de production, peuvent être des granulés, des miettes, des flocons, des croquettes, etc.

Les aliments multicomposants sont des aliments comprenant au moins deux composants unitaires différents.

La Demanderesse a découvert, de façon surprenante, qu'il est possible de ralentir l'ingestion d'aliment par les chiens, et particulièrement par les chiens de grande taille ou de grande race, en leur offrant un aliment sec dont un composant unitaire présente la forme d'un parallélépipède de dimensions bien définies. Le parallélépipède peut avoir des faces complètement plates ou légèrement bombées, et des bords lisses ou présentant des encoches et des cannelures.

Les trois dimensions du composant alimentaire parallélépipèdique de l'invention sont de 29 à 40 millimètres (mm) X de 29 à 40 millimètres X de 19 à 30 millimètres.

Dans un autre mode de mise en oeuvre préférentielle de l'invention, le composant unitaire de l'aliment aura les dimensions de 29 à 33 millimètres X de 29 à 32 millimètres X de 19 à 25 millimètres.

L'invention concerne aussi les aliments secs pour chiens dont un composant unitaire a la forme et les dimensions décrites ci-dessus. La forme et les dimensions des aliments sont indépendantes de la composition de ces derniers, pourvu qu'ils contiennent :
- au moins une source de protéine d'origine animale ou végétale, et/ou
- au moins une source de glucides lents ou rapides, en particulier des céréales et/ou leurs sous-produits, et/ou
- au moins une source de matière grasse d'origine animale ou végétale.

Un aliment de l'invention peut aussi servir d'excipient pour tout additif ou médicament vétérinaire utiles pour l'hygiène bucco-dentaire des chiens.

Les exemples suivants vont illustrer l'invention.

### Exemple 1

On a acheté des aliments secs pour chiens du commerce des grandes marques connues. On décrit le type et la forme des composants unitaires de chaque aliment. On mesure ensuite, au pied à coulisse, les dimensions de 10 composants unitaires de chaque aliment.

Les résultats sont dans le Tableau 1 suivant:

**TABLEAU 1**

| Marque / Aliment | Type et Forme des composants unitaires | Dimensions moyennes de 10 composants unitaires (mm) |
|---|---|---|
| Eukanuba Large Breed Regular (Réf: 17 10 00 CD4EN) | Monocomposant Disque | Diamètre: 17.9 |
| | | Epaisseur : 7.6 |
| Purina Proplan Adult Rich in Chicken&Rice (Réf: 10 08 01 F0410231) | Monocomposant triangle | Hauteur: 19.0 |
| | | Base : 17.7 |
| | | Epaisseur : 5.4 |
| Royal Canin Size Maxi Adult 1 (Réf: B 10/03/01 04H57 P2) | Monocomposant Disque | Diamètre: 16.0 |
| | | Epaisseur : 9.1 |
| Royal Canin Size Mini Junior (Réf: B 29/03/01 00H20 P6) | Monocomposant triangle | Hauteur : 8.9 |
| | | Base : 9.0 |
| | | Epaisseur : 3.9 |
| Royal Canin Size Medium Adult 1 (Ref: A 06/04/01 14H35 00097039) | Monocomposant Disque | Diamètre : 14.4 |
| | | Epaisseur : 8.0 |
| Hills T/D (Réf: 12.00 021R50918) | Monocomposant cylindre aplati | Longueur : 28.3 |
| | | Largeur : 25.9 |
| | | Epaisseur : 18.0 |
| Hills Science Plan Large Breed Original with Chicken (Réf: 07 00 031 S 102100) | Monocomposant Disque | Diamètre: 13.9 |
| | | Epaisseur : 9.8 |
| | | |
| Pedigree Menu Senior (Réf: 07 01 01 L09 15 :4) | Multicomposant Tuile + flocon + os | Tuile: |
| | | Longueur : 16.7 |
| | | Largeur : 14.4 |
| | | Epaisseur : 10.2 |
| | | Flocon : |
| | | Longueur : 16.5 |
| | | Largeur : 5.9 |
| | | Epaisseur : 1.2 |
| | | Os : |
| | | Longueur : 22.3 |
| | | Largeur : 13.3 |
| | | Epaisseur : 7.4 |

Ainsi, la forme de disque est la plus courante. On note aussi qu'aucun des aliments examinés ne présente des composants unitaires ayant la forme et les dimensions du composant unitaire de l'invention.

### Exemple 2

On fabrique un aliment pour chiens adultes sous forme de farine et ayant pour composition :
- protéine brute : 26,0 %
- lysine : 1,36 %
- arginine: 1,63 %
- méthionine : 0,55 %
- matières grasses : 16,0 %
- cellulose brute : 2,50 %
- matières minérales : 5,80 %
- calcium : 1,00%
- phosphore : 0,70 %

A partir de cet aliment en farine, on fabrique deux aliments secs avec le même extrudeur de la marque Wenger :
- un aliment Témoin dont le composant unitaire a la forme d'une croquette courante, en forme de disque de 16.0 millimètres de diamètre et de 9.1 millimètres d'épaisseur,
- un aliment Expérimental dont le composant unitaire a la forme parallélépipèdique de l'invention et les dimensions de 33 X 32 X 20 millimètres.

On distribue ces deux aliments individuellement à des chiens de grandes races de la façon suivante: lors d'un premier repas, on distribue l'aliment Témoin en quantité égale à la ration habituelle de chaque chien et on chronomètre son temps d'ingestion ; au repas suivant, on remplace l'aliment Témoin par l'aliment Expérimental.

L'essai a porté sur 3 chiens de la race Rottweiler, 5 chiens de la race Léonberg et 4 chiens de la race Dogue Allemand.

Comme les chiens sont de races, de tailles et d'appétits différents, donc recevant des rations différentes, le temps d'ingestion des aliments Témoin et Expérimental de chaque chien est exprimé de façon homogène en secondes par 100 grammes d'aliment ingéré. Les résultats individuels sont rapportés dans le Tableau 2 ci-joint.

**TABLEAU 2**

| Race | Chien | Ration (g) | Temps d'ingestion de 100 g d'aliment (secondes) | | |
|---|---|---|---|---|---|
| | | | Témoin (T) | Expérimental (E) | E/T (%) |
| Rottweiler | Nonda | 120 | 129.2 | 262.9 | 203.5 |
| | Onyx | 600 | 46.7 | 201.1 | 430.6 |
| | Madjie | 480 | 19.6 | 28.0 | 142.9 |
| Léonberg | O'zidane | 600 | 91.0 | 123.4 | 135.6 |
| | O'zidane 2 | 200 | 60.0 | 125.7 | 209.5 |
| | Nanon | 550 | 125.1 | 187.2 | 149.6 |
| | Jordan | 550 | 125.3 | 248.6 | 198.4 |
| | Jordan 2 | 200 | 123.0 | 245.1 | 199.3 |
| Dogue Allemand | Orselia | 580 | 22.1 | 37.7 | 170.6 |
| | Jade | 400 | 12.8 | 22.0 | 171.9 |
| | Jana | 580 | 27.8 | 42.3 | 152.2 |
| | Odyssée | 580 | 26.0 | 52.0 | 200.0 |

Ces résultats montrent que, quel que soit le chien, le temps d'ingestion de l'aliment Expérimental est plus long que celui de l'aliment Témoin.

### Exemple 3

On fabrique un aliment en farine titrant :
- protéine brute : 31,0 %
- lysine : 1,78 %
- arginine : 1.95 %
- méthionine : 0.84 %
- matières grasses : 25.0 %
- matières minérales : 6.50 %
- calcium : 1,35 %
- phosphore : 1,00 %

A partir de cet aliment en farine, on fabrique 2 aliments secs avec un même extrudeur de la marque Wenger :
- un aliment Témoin 2 dont la composant unitaire a la forme d'un disque de 14.4 millimètres de diamètre et de 8.0 millimètres d'épaisseur,
- et un aliment Expérimental 2 dont le composant unitaire a la forme de l'aliment parallélépipèdique de l'invention et les dimensions de 29 X 29 X 19 millimètres.

Lors d'un premier repas, on distribue 5 600 grammes de l'aliment Témoin 2 à un groupe de 7 jeunes chiennes de la race Terre Neuve vivant et nourries en meute, et on chronomètre le temps d'ingestion de la ration distribuée. Au repas suivant, on remplace l'aliment Témoin 2 par l'aliment Expérimental 2.

Les temps d'ingestion des 2 aliments ont été respectivement de :
- pour l'aliment Témoin 2 : 564 secondes
- pour l'aliment Expérimental 2 : 1 192 secondes (211.5% de l'aliment Témoin 2).

Ces résultats montrent que, comme chez les chiens nourris individuellement de l'essai précédent, un aliment selon l'invention a aussi ralenti la vitesse d'ingestion des chiens nourris en groupe.

## Revendications

1. Aliment sec destiné à l'alimentation des chiens contenant :
- au moins une source de protéine d'origine animale ou végétale, et/ou
- au moins une source de glucides lents ou rapides et/ou
- au moins une source de matière grasse d'origine animale ou végétale,
se présentant sous la forme d'un parallélépipède, **caractérisé en ce que** le parallélépipède présente des dimensions de 29 à 40 mm X 29 à 40 mm X 19 à 30 mm.

2. Aliment selon la revendication 1, **caractérisé en ce que** le parallélépipède présente des bords lisses.

3. Aliment selon la revendication 1, **caractérisé en ce que** les bords du parallélépipède comportent des encoches ou des cannelures.

4. Aliment selon l'une des revendications 1 à 3, **caractérisé en ce que** le parallélépipède présente des dimensions de 29 à 33 mm X 29 à 32 mm X 19 à 25 mm.

5. Aliment selon l'une des revendications 1 à 4, **caractérisé en ce qu'**il est utilisé pour l'alimentation de chiens de grande race.

6. Composition selon l'une des revendications 1 à 5 pour son utilisation en thérapie.

7. Utilisation non thérapeutique d'une composition selon l'une des revendications 1 à 5 pour ralentir la vitesse d'ingestion d'aliments par les chiens.

8. Composition selon l'une des revendications 1 à 5 pour son utilisation dans l'amélioration de l'hygiène bucco-dentaire chez les chiens.

## Patentansprüche

1. Trockenfutter, bestimmt zur Ernährung von Hunden, enthaltend:
- mindestens eine Proteinquelle tierischen oder pflanzlichen Ursprungs und/oder
- mindestens eine Quelle von langsamen oder schnellen Kohlenhydraten und/oder
- mindestens eine Fettquelle tierischen oder pflanzlichen Ursprungs, welches in Form eines Parallelepipeds vorliegt, **dadurch gekennzeichnet, dass** das Parallelepiped Abmessungen von 29 bis 40 mm x 29 bis 40 mm x 19 bis 30 mm aufweist.

2. Futter nach Anspruch 1, **dadurch gekennzeichnet, dass** das Parallelepiped glatte Ränder aufweist.

3. Futter nach Anspruch 1, **dadurch gekennzeichnet, dass** die Ränder des Parallelepipeds Kerben oder Rillen aufweisen.

4. Futter nach einem der Ansprüche 1 bis 3, **dadurch gekennzeichnet, dass** das Parallelepiped Abmessungen von 29 bis 33 mm x 29 bis 32 mm x 19 bis 25 mm aufweist.

5. Futter nach einem der Ansprüche 1 bis 4, **dadurch gekennzeichnet, dass** es für die Ernährung von Hunden einer großen Rasse verwendet wird.

6. Zusammensetzung nach einem der Ansprüche 1 bis 5 für deren Verwendung in der Therapie.

7. Nicht-therapeutische Verwendung einer Zusammensetzung nach einem der Ansprüche 1 bis 5 zur Verlangsamung der Geschwindigkeit der Futteraufnahme durch die Hunde.

8. Zusammensetzung nach einem der Ansprüche 1 bis 5 für deren Verwendung bei der Verbesserung der bukkodentalen Hygiene bei den Hunden.

## Claims

1. A dry food for feeding to a dog comprising:
- at least one source of protein of animal or plant origin, and/or
- at least one source of a slow or fast carbohydrates, and/or
- at least one source of fat of animal or plant origin, having the shape of a parallelepiped, **characterized in that** the parallelepiped has dimensions from 29 to 40 mm x 29 to 40 mm x 19 to 30 mm.

2. Food according to claim 1, **characterized in that** the parallelepiped has smooth edges.

3. Food according to claim 1, **characterized in that** the edges of the parallelepiped contain notches or grooves.

4. Food according to one of claims 1 to 3, **characterized in that** the parallelepiped has dimensions from 29 to 33 mm x 29 to 32 mm x 19 to 25 mm.

5. Food according to one of claims 1 to 4, **characterized in that** it is used for feeding dogs of great race.

6. Composition according to one of claims 1 to 5, for its use in therapy.

7. Non-therapeutic use of a composition according to one of claim 1 to 5, for slowing the speed of food ingestion by the dogs.

8. Composition according to one of claims 1 to 5, for its use for improving the dentibuccal hygiene in dogs.
